# EUROPEAN PATENT APPLICATION

(11) **EP 4 195 624 A1**
(43) Date of publication of application: **14.06.2023**
(21) Application number: 21902245.6
(22) Date of filing: 26.10.2021
(51) Int. Cl.: H04L 65/40, H04L 9/40, G06Q 20/06, G06Q 20/38, G06Q 40/04

(54) **DATA SYNCHRONIZATION METHOD AND SYSTEM BASED ON BLOCKCHAIN, AND RELATED DEVICE**

(30) Priority: 10.12.2020 CN 202011433372
(71) Applicant: Tencent Technology (Shenzhen) Company Limited, Shenzhen, Guangdong 518057 (CN)
(72) Inventor: ZHU, Gengliang, Shenzhen, Guangdong 518057 (CN)
(74) Representative: Eisenführ Speiser
(86) International application number: PCT/CN2021/126276
(87) International publication number: WO 2022/121538

(57) **Abstract**

Provided in the embodiments of the present disclosure are a data synchronization method and system based on a blockchain, an electronic device and a computer-readable medium. The blockchain comprises a hierarchical structure formed by a consensus node, a first service node and a second service node, the consensus node being a root node in the hierarchical structure, and the first service node and the second service node being descendant nodes of the consensus node. Said method comprises: a first service node receiving block header data issued by a consensus node according to a hierarchical structure; the first service node downloading transaction hash data according to the block header data; the first service node receiving a buffer mapping table of a second service node; and the first service node receiving, according to the buffer mapping table of the second service node, transaction content data corresponding to a storage index and sent by the second service node. The technical solution provided in the embodiments of the present disclosure can implement a blockchain system with an isolation requirement and a data synchronization scheme with high efficiency and security in the system.

## Description

### RELATED APPLICATION

This application claims priority to Chinese Patent Application No. 202011433372.5, entitled "METHOD AND SYSTEM FOR DATA SYNCHRONIZATION BASED ON BLOCKCHAIN, AND RELATED DEVICE" and filed with the China National Intellectual Property Administration on December 10, 2020, which is incorporated herein by reference in its entirety.

### FIELD OF THE TECHNOLOGY

The present disclosure relates to the technical field of computer data processing, specifically to a method and a system for data synchronization based on a blockchain, an electronic device, and a computer-readable medium.

### BACKGROUND OF THE DISCLOSURE

Not all the nodes in a blockchain are sufficiently resourceful and necessary for participating in blockchain consensus, when the blockchain is applied to some scenarios related to a government or a commercial institution, for example, to a scenario of managing electronic tax receipts. For the sake of data security, a conventional peer-to-peer manner for deploying a blockchain is not suitable when data in a blockchain system relates to personal privacy or national security. In view of the above issues, it is worth studying how to apply blockchain technology to the scenarios related to a government or a commercial institution, and how to implement data synchronization and blockchain deployment when it is unnecessary that all nodes in a blockchain participate in consensus.

Therefore, there is a need for a novel method as well as a system for data synchronization based on blockchains, an electronic device, and a computer-readable medium.

### SUMMARY

A method and a system for data synchronization and system based on a blockchain, an electronic device and a computer-readable medium are provided according to embodiments of the present disclosure. Achieved are a blockchain system having a demand for segregation and efficient and secure data synchronization in such system.

Other features and advantages of the present disclosure would become obvious through following detailed description, or may be learned partially from practicing the present disclosure.

In one aspect, a method for data synchronization based on a blockchain is provided according to an embodiment of the present disclosure. The blockchain comprises a hierarchical structure comprising a consensus node, a first service node, and a second service node, where the consensus node is a root node in the hierarchical structure, and the first service node and the second service node are descendant nodes of the consensus node. The method comprises: receiving, by the first service node, block header data which is issued by the consensus node through the hierarchical structure; downloading, by the first service node, transaction hash data according to the block header data; receiving, by the first service node, a first buffer map of the second service node, where the first buffer map comprises a mapping correspondence between the transaction hash data and a storage index of transaction content data locally at the second service node; and receiving, by the first service node, the transaction content data, which is stored based on the storage index corresponding to the transaction hash data, from the second service node according to the first buffer map.

In another aspect, a system for data synchronization based on a blockchain is provided according to an embodiment of the present disclosure. The blockchain comprises a hierarchical structure comprising a consensus node, a first service node, and a second service node, where the consensus node is a root node in the hierarchical structure, and the first service node and the second service node are descendant nodes of the consensus node. The consensus node is configured to issue block header data through the hierarchical structure. The second service node is configured to transmit a buffer map of the second service node to the first service node, where the first buffer map comprises a mapping correspondence between the transaction hash data and a storage index of transaction content data locally at the second service node. The first service node is configured to receive the block header data issued by the consensus node through the hierarchical structure, download the transaction hash data according to the block header data, receive the buffer map of the second service node, and receive the transaction content data, which is stored based on the storage index corresponding to the transaction hash data, from the second service node according to the buffer map.

An electronic device is provided according to an embodiment of the present disclosure. The electronic device comprises: at least one processor; and a storage apparatus, configured to store at least one program, where the at least one program when executed by the at least one processor configures the at least one processor to implement the method for data synchronization based on the blockchain described in the foregoing aspect.

A computer-readable medium is provided according to an embodiment of the present disclosure. The computer-readable medium stores a computer program, where the computer program when executed by a processor implements the method for data synchronization based on the blockchain described in the foregoing aspect.

In another aspect, a computer program product is provided another aspect according to an embodiment of the present disclosure. The computer program produce comprises instructions, where the instructions when executed on a computer configure the computer to perform the method for data synchronization based on the blockchain described in the foregoing aspect.

In embodiments of the present disclosure, the technical solutions are based on the hierarchical structure formed by the consensus node, the first service node and the second service node. The block header data is issued to the first service node through the hierarchical structure, which can ensure certain connectivity between the consensus node and the service nodes (the first service node and the second service node) while preventing over-connection between the service nodes and the consensus node. The consensus node serving as the root node issues the block header data to a descendant node serving as a service node, which can achieve fast issuance of the block header data. The download of the transaction hash data is triggered according to the block header data, and the transaction content data is transmitted from the second service node to the first service node, which can fully exploit performances of a peer-to-peer network and reduce a network consumption of the consensus node due to the service nodes. It is ensured that a nonessential data request of the blockchain does not affect normal block production after consensus.

The foregoing general description and following detailed description are merely illustrative and explanatory, and are not intended to limit the present disclosure.

### BRIEF DESCRIPTION OF THE DRAWINGS

Figure 1 is an optional schematic structural diagram of a distributed system applied to a blockchain system according to relevant technology.
Figure 2 is an optional schematic diagram of a block structure according to relevant technology.
Figure 3 is an optional schematic structural diagram of a blockchain system according to an embodiment of the present disclosure;
Figure 4 is a schematic systematic diagram of a blockchain system as shown in Figure 3 applied to a scenario concerning electronic tax receipts.
Figure 5 is a flowchart of a method for data synchronization based on a blockchain according to an embodiment of the present disclosure.
Figure 6 is a schematic structural diagram of a hierarchical structure according to an embodiment of the present disclosure.
Figure 7 is a flowchart of a method for data synchronization based on a blockchain according to another embodiment of the present disclosure.
Figure 8 is a flowchart of a method for data synchronization based on a blockchain according to another embodiment of the present disclosure.
Figure 9 is a flowchart of a method for data synchronization based on a blockchain according to another embodiment of the present disclosure.
Figure 10 is a schematic block diagram of a system for data synchronization based on a blockchain according to an embodiment of the present disclosure.
Figure 11 is a schematic structural diagram of an electronic device adapted to implement embodiments of the present disclosure.

### DESCRIPTION OF EMBODIMENTS

Exemplary implementations are now described more comprehensively with reference to the drawings. Embodiments may be implemented in various forms, and should not be construed as being limited to examples described herein. Rather, these examples render the present disclosure more comprehensive and complete, and convey a concept of embodiments thoroughly to those skilled in the art.

In addition, features, structures, or characteristics that are described may be combined in one or more embodiments in any appropriate manner. Following description provide more specific details to facilitate comprehensive understanding of embodiments of the present disclosure. Those skilled in the art will be aware that technical solutions in the present disclosure may be implemented without one or more specific details, or with another method, unit, apparatus, system, or step. In other cases, conventional methods, apparatuses, systems, implementations, or operations are not shown or described in detail to avoid obscuring aspects of the present disclosure.

The block diagrams as shown in the drawings are merely functional entities and do not necessarily correspond to physically independent entities. That is, the functional entities may be implemented as software, or in at least one hardware module or integrated circuit, or in different networks and/or processor apparatuses and/or microcontroller apparatuses.

The flowcharts as shown in the drawings are merely exemplary description, do not necessarily comprise all content and operations/steps, and do not necessarily be performed in an order as described. For example, some operations/steps may be further divided, while some operations/steps may be combined or partially combined. Therefore, an actual execution order may change according to an actual situation.

The system involved in relevant technology may be a distributed system formed by connecting a client and multiple nodes (each of which is a computing device of any form in an access network, such as a server or a user terminal) via network communication.

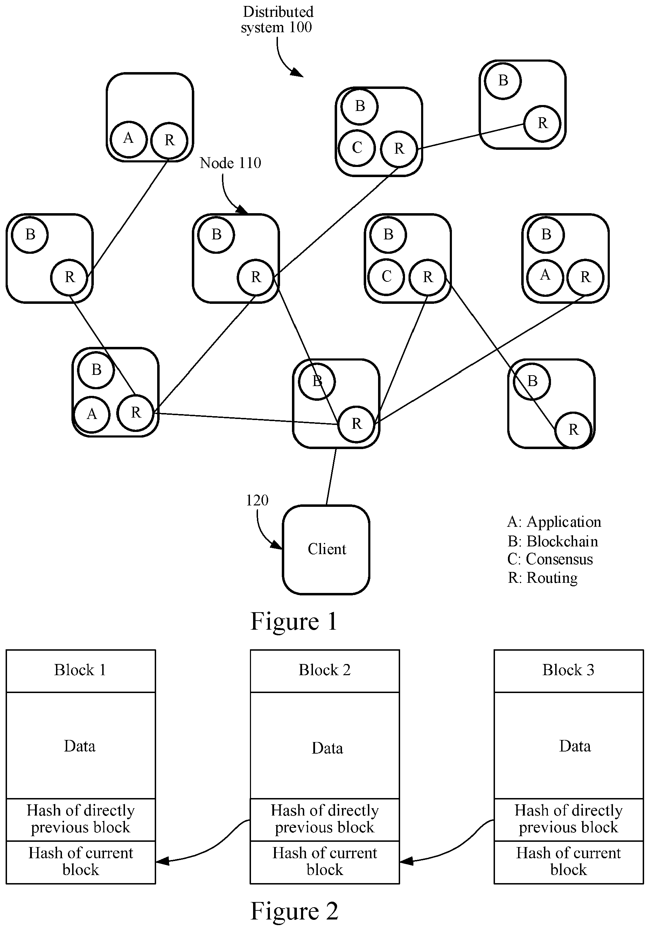

It is taken as an example that a distributed system is a blockchain system. Figure 1 is an optional schematic structural diagram of a distributed system 100 applied in a blockchain system in relevant technology. The distributed system comprises multiple nodes 110 (each of which is a computing device of any form in an access network, such as a server or a user terminal) and a client 120. A peer-to-peer (P2P) network is formed among the nodes. The P2P protocol is for an application layer and runs on top of the transmission control protocol (TCP). In the distributed system, any machine such as a server and a terminal can participate as a node, which comprises a hardware layer, a middle layer, an operating system layer, and the application layer.

Reference is made to Figure 1 for functions of each node in the blockchain system. The relevant functions include routing, application, and a blockchain.
1) Routing is a basic function of a node, and is configured to support communication among the nodes.
   The node may further have the application function besides the routing function.
2) An application is deployed in the blockchain to implement a specific service according to an actual requirement, and is configured to record data concerning implementing a function to generate record data. The record data carries a digital signature which indicates a source of task data, and is transmitted to other nodes in the blockchain system. Thereby, the record data can be added into a temporary block after the other nodes verify the source and integrity of the record data successfully.

For example, the service implemented by the application is a wallet, a shared ledger, or a smart contract.

2.1) The wallet is configured to provide a function of digital-currency transactions, including initiating a transaction, that is, transmitting a record of the current transaction to other nodes in the blockchain system. After verification at the other nodes, the record data of the transaction is stored into a temporary block of the blockchain in response to such transaction being acknowledged to be valid. It is appreciate that the wallet further supports a query of an amount of digital currencies remained at a digital-currency address.

2.2) The shared ledger is configured to provide a function such as storing, querying and modifying account data. The record data of manipulating the account data is transmitted to other nodes in the blockchain system. After verification at the other nodes, the record data is stored into a temporary block in response to the account data being acknowledged to be valid. Moreover, the acknowledgement may be transmitted to the node that initiates the manipulation.

2.3) The smart contract is a computerized agreement. Terms of the contract may be executed through a code deployed on the shared ledger, and the code is executed when a certain condition is met. The code is configured to achieve an automated transaction according to an actual service requirement. For example, a logistics status of a commodity purchased by a consumer is queried, and digital currencies of the consumer are transferred to an address of a supplier after the consumer signs for receipt of the commodity. It is appreciate that smart contract is not limited to executing a contract for transactions, and may execute a contract for processing received information.

3) A blockchain comprises a series of blocks that are linked based on a chronological order. Once added into the blockchain, a new block would never be removed. The block records the record data submitted by the nodes in the blockchain system.

Reference is made to Figure 2, which is an optional schematic diagram of a block structure in relevant technology. Each block comprises a hash of a transaction record stored therein (i.e., the hash of such block) and a hash of a previous block. All blocks are lined as a block chain based on the hashes. In addition, the block may further comprise information such as a timestamp of a moment at which the block is generated. In essence, the blockchain is a decentralized database, and is a string of data blocks which are generated and associated on a basis of cryptography. Each data block comprises relevant information for verifying validity of its information (anti-counterfeiting) and generating a next data block.

In relevant technology, the peer-to-peer (P2P) network is based on a specific network protocol which does not need a central node to maintain a state of the network. Instead, broadcast between every node and its neighboring nodes are used to maintain a state of every node in the whole network, or a connection state of the neighboring nodes.

In relevant technology, the P2P scheme is generally adopted in public chains and alliance chains. In some public chains, one node can transmit a peer list maintained by itself to a neighboring node. Hence, an initial node needs to copy a node list the neighboring node when it is aware of the peer list. In other public chains, all nodes use a specific algorithm (such as the Kademlia algorithm, or the Kad algorithm) to achieve fast and accurate routing and position a piece of data. Alliance chains may adopt a data distribution network based on the Gossip protocol. A gossip process is initiated by a seed node. When requiring updating a state to other nodes in the network, the seed node selects several adjacent nodes randomly and spread a message to the selected nodes. Then, the nodes that have received the message repeat such process, until all nodes in the network have eventually received the message.

Each of the foregoing P2P schemes for relevant blockchain products is applied to a single-layer network, in which all nodes are adapted to the unified P2P scheme, i.e., are peers in the same network. The relevant P2P networks have a low performance when being applied to a business blockchain having a high requirement on confidentiality of data transmission. Hence, the single-layer blockchain is not capable to guarantee that a core consensus algorithm is efficiently executed in a high-end blockchain product.

For example, when applied to some scenarios in a government or a commercial institution, for example, when there is segregation between internal and external networks, between service networks, or between office networks, the above schemes cannot guarantee the confidentiality and security of data related to personal privacy or national security in the blockchain system. Furthermore, the above schemes ignore a possibility that some nodes need not participate in consensus. When all nodes participate in the consensus, an amount of exchanged data is tremendous because all the nodes are involved in the data exchange. The large data amount would definitely hinder efficient execution of the core consensus algorithm, and thereby affect normal block production after consensus among consensus nodes.

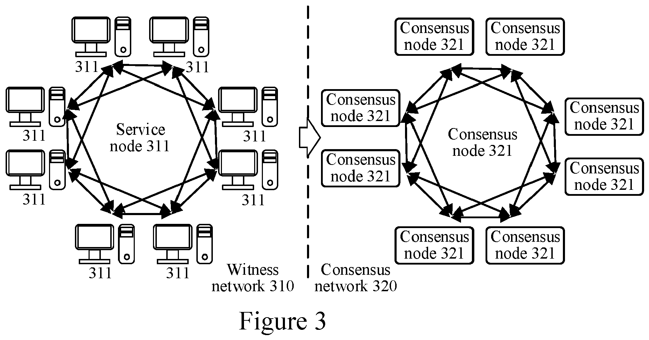

Figure 3 shows an optional schematic structural diagram of a blockchain system according to an embodiment of the present disclosure. As shown in Figure 3, the blockchain system may be divided into a witness network 310 and a consensus network 320. The witness network 310 includes a service node 311, and the consensus network 320 includes a consensus node 321. The service node 311 in the witness network mainly implements a service, and does not participate in accounting and consensus. Instead, the service node 311 acquires block header data and partial block data, to which it is authorized from the consensus network, by means of identity authentication. The service node in the witness network does not participate in a core consensus algorithm, and performs verification through witness. The "witness" in transactions of virtual currency refers to verifying legitimacy of a transaction, and may be performed through the segregated witness (SegWit) algorithm. The main concept of the SegWit algorithm is reorganizing block data such that signatures are no longer stored along with transaction data. In other words, the SegWit includes segregating verifiers (signatures) from the transaction data. Thus, more transactions can be stored in a single block, thereby increasing a throughput of transactions in the network. The witness network and the consensus network are arranged in different network environments. Generally, the witness network is arranged in a public network, and the consensus network is arranged in a private network.

The service node is deployed in the public witness network, while an accounting node (i.e., the consensus node as shown in Figure 3) executing a blockchain consensus protocol is deployed in the private consensus network. The service node and the accounting node interact via boundary routing.

The consensus network is in a secure private cloud, and security of mutual accesses therein is inherently ensured through a consensus mechanism. Hence, additional identity management and network control are not necessary. The service node is in the public network and may be accessed by uncertain network terminals, and hence behavior of accessing the consensus network should be strictly controlled at the service nodes and other candidate nodes. On a basis of such deployment, a blockchain system with high data security can be implemented in a scenario having a requirement on data confidentiality.

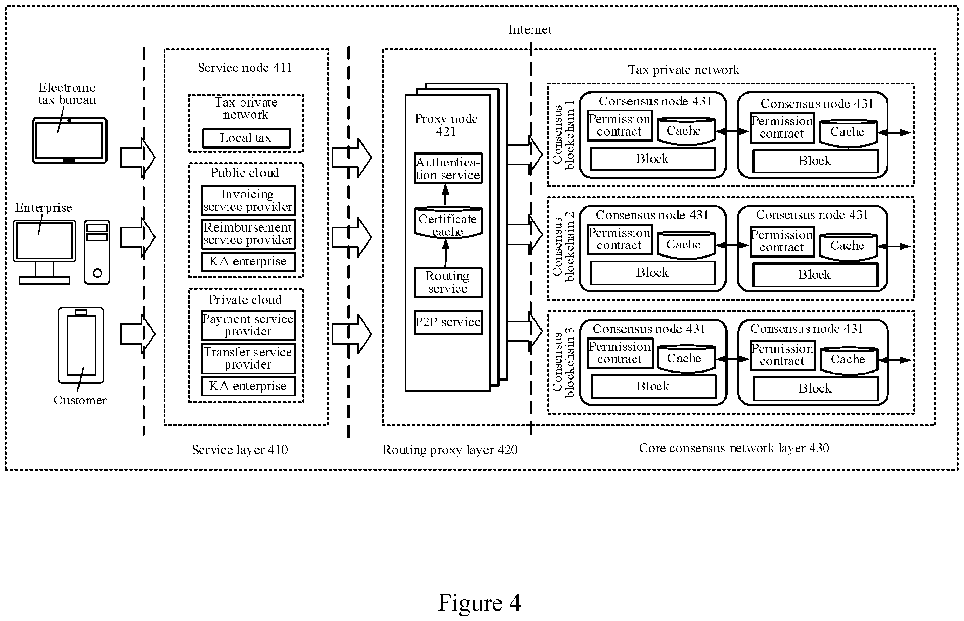

Figure 4 is a schematic systematic diagram of a blockchain system as shown in Figure 3, which is applied to a scenario concerning a service of electronic tax receipts. As shown in Figure 4, a service layer 410 is located in the witness network and can submit service manipulating interactions to a consensus layer. The service layer 410, a routing proxy layer 420, and a core consensus network layer 430 (i.e., the foregoing consensus network) constitutes an entire blockchain service system. The routing proxy layer is configured to segregate the service layer and the core consensus network layer.

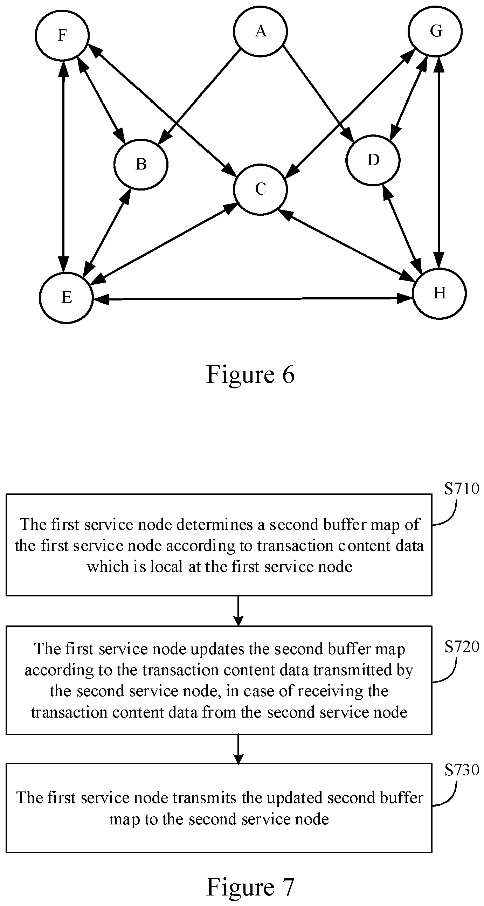

Figure 6 shows a schematic structural diagram of a hierarchical structure according to an exemplary embodiment of the present disclosure. As shown in Figure 6, herein the hierarchical structure may comprise consensus nodes A, G, and F, which serve as root nodes, and service nodes B, C, D, E, and H, which serve as descendant nodes of the consensus nodes. The consensus nodes are configured to participate in a core consensus mechanism. Herein a first service node may refer to an arbitrary descendant node of a consensus node, and a second service node may refer to a descendant node which is of the consensus node and other than the first service node. Preferably, in the hierarchical structure herein, the nodes A, G, and F are in the first layer of the hierarchical structure, the nodes B, C, and D are in the second layer of the hierarchical structure, and the nodes E and H are in the third layer of the hierarchical structure. Two connected nodes in adjacent layers, respectively, are mutually a parent node and a child node. For example, the nodes B and C are parent nodes of the node E, and the node E is a child node of the nodes B and C. Preferably, a service node may be randomly connected to a parent node of its parent node. For example, the node E in the third layer is connected to node F in the first layer. The node F is not the parent node of the node E but the parent node of the parent node of node E, that is, is an ancestor node additionally connected to the node E. Such connection can make the network more robust.

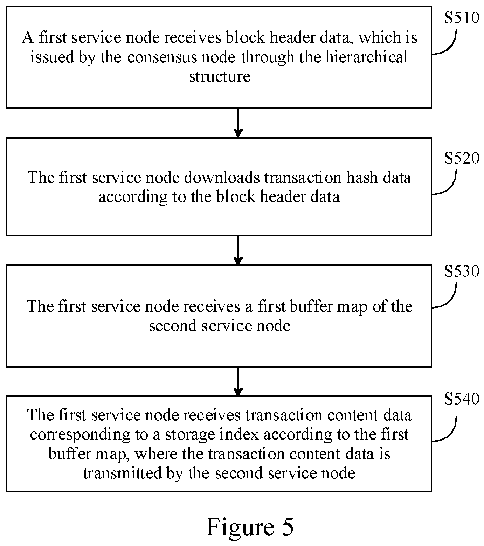

Figure 5 shows a flowchart of a method for data synchronization based on a blockchain according to an embodiment of the present disclosure. In this embodiment, the method may be performed by any electronic device having a computing or processing capability. The method is applicable to a blockchain, which may comprise a hierarchical structure having a consensus node, a first service node, and a second service node. The consensus node is a root node in the hierarchical structure, and the first service node and the second service node are descendant nodes of the consensus node.

In this embodiment, the method for data synchronization based on the blockchain as shown in Figure is performed at the first service node, and may include the following steps S510 to S540.

In S510, the first service node receives block header data, which is issued by the consensus node through the hierarchical structure.

Herein the first service node may receive the issued block header data from a parent node of the first service node, and the consensus node issues the block header data to the parent node of the first service node through the hierarchical structure. It is taken as an example that the first service node is the service node E as shown in Figure 6. The block header data issued by the consensus node through the hierarchical structure may be issued to the child nodes in the second layer by one or more of the consensus nodes F, A, and G, and then issued to the child nodes in the third layer from the service nodes in the second layer. For example, the consensus node F in the first layer issues the block header data to the child nodes of node F in the next layer, which are the service nodes B and C. After receiving the block header data, the service node B issues the block header data to the child node of node B in the third layer, which is the service node E. Herein the first service node receives the block header data issued by the consensus node through the hierarchical structure, which can achieve fast synchronization of the block header data.

In S520, the first service node downloads transaction hash data according to the block header data.

Herein the transaction hash data is an identifier of transaction data, for example, may be a transaction number for transaction content data. The transaction hash data may be comprised in block body data. The block body data may further comprise the transaction content data. After receiving the block header data, the first service node is triggered to download the transaction hash data, so as to achieve fast synchronization of the transaction hash data.

In S530, the first service node receives a first buffer map of the second service node. The first buffer map comprises a mapping correspondence between the transaction hash data and a storage index, which is of transaction content data locally at the second service node.

Herein the storage index may be an address of a local storage, a number representing of a storage position, or the like, of a piece of the transaction content data at a corresponding service node (i.e., the second service node in this embodiment). The second service node is capable to acquire a specific piece of the transaction content data locally based on the storage index. The transaction hash data is a transaction number for a corresponding piece of the transaction content data. Each second service node may broadcast its own buffer map in the network. The second service node may be a service node connected to the first service node. In the hierarchical structure, the second service node may be a network node in the same layer as the first service node, or may be a parent node of the first service node.

In S540, the first service node receives the transaction content data corresponding to the storage index according to the first buffer map, where the transaction content data is transmitted by the second service node.

Herein the first service node may determine the storage index in the second service node according to the first buffer map, where the storage index is of the transaction content data which is required to be downloaded by the first service node. The transaction content data required to be downloaded by the first service node refers to a piece (or pieces) of transaction content data which needs to be locally stored at the first service node. After determining such transaction content data according to the transaction hash data, the first service node transmit a data request for the transaction content data to the second service node. The data request carries the storage index corresponding to the transaction content data. Thereby, the second service node can acquire specific transaction content data locally according to the storage index, and returns such transaction content data to the first service node. Hence, the transaction content data is synchronized.

The foregoing method according to embodiment of the present disclosure is based on the hierarchical structure comprising the consensus node, the first service node, and the second service node. The block header data is issued to the first service node through the hierarchical structure, which can ensure certain connectivity between the consensus node and the service nodes (the first service node and the second service node) while preventing over-connection between the service nodes and the consensus node. The consensus node serving as the root node issues the block header data to a descendant node serving as a service node, which can achieve fast issuance of the block header data. The download of the transaction hash data is triggered according to the block header data, and the transaction content data is transmitted from the second service node to the first service node, which can fully exploit performances of a peer-to-peer network and reduce a network consumption of the consensus node due to the service nodes. It is ensured that a nonessential data request of the blockchain does not affect normal block production after consensus.

In an embodiment, when the first service node receives the block header data issued by the consensus node through the hierarchical structure in the step S510, the first service node may verify the block header data according to first block hash information of the block header data and second block hash information of target block header data. The target block header data is block header data which is directly previous to the block header data and is locally stored at the first service node. In this embodiment, the first service node is capable to ensure correctness of the received block header data through verification on the received block header data. Therefore, the first service node can proceed to the step S520 with more accuracy after the verification succeeds.

In an embodiment, as shown in Figure 6, when a quantity of parent nodes (e.g., the node B) of the first service node (e.g., the node E) is less than a quantity threshold of parent nodes, or when connection between the first service node and a parent node thereof fails, a service node in a layer directly superior to the first service node in the hierarchical structure is added as a parent node of the first service node. When adding the service node in the directly superior layer as the parent node fails, a service node in a same layer as the first service node in the hierarchical structure is added as the parent node of the first service node.

The quantity threshold of parent nodes is configured to define a minimum number of parent nodes connected to each service node, and may have a value including but not limited to 2, 3, or 4. For example, the quantity threshold of parent nodes is 2 for the service node as shown in Figure 6. The parent nodes of the service node E comprise the service nodes Band C, the parent nodes of the service node H comprise the service nodes C and D, and the parent nodes of the service node B comprise the consensus nodes F and A. Preferably, it is ensured that each service node has two or more parent nodes, and hence a quantity of service nodes in each layer may be required as more than twice the quantity of nodes in the directly superior layer (which is not depicted in Figure 6). Connection between the first service node and the parent node thereof may fail due to, for example, malfunction of the parent node of the first service node. In a case that the service node (for example, the service node D in Figure 6) in the directly superior layer is added as the parent node of the first service node, the first service node (for example, the service node E in Figure 6) may learn service node(s) included in each layer according to content broadcast by other service nodes, thereby determine service node(s) in the layer directly superior to the first service node, and request connection to the service node in the directly superior layer. Hence, the service node in the directly superior can serve as the parent node of the first service node.

In this embodiment, the quantity of parent nodes of each service node is limited based on the quantity threshold of parent nodes. Thereby, a certain degree of connectivity between the first service node and the second service node(s) is guaranteed, preventing that data cannot be transmitted due to a failure in a service node.

Figure 7 shows a flowchart of a method for data synchronization based on a blockchain according to an embodiment of the present disclosure.

As shown in Figure 7, the method for data synchronization based on the blockchain according to an embodiment as shown in Figure 5 may further include following steps S710 to S730.

In S710, the first service node determines a second buffer map of the first service node according to transaction content data which is local at the first service node.

Herein identifier(s) of the transaction content data locally stored at the first service node may be stored based on a buffer map of the first service node. Thereby, the transaction content data locally stored at the first service node can be learned according to the second buffer map of the first service node.

In S720, the first service node updates the second buffer map according to the transaction content data transmitted by the second service node, in case of receiving the transaction content data from the second service node.

Herein the first service node may store the transaction content data transmitted by the second service node locally, in case of receiving such transaction content data. Thereby, the transaction content data locally stored at the first service node is updated. The buffer map of the first service node is updated according to the new transaction content data transmitted by the second service node, which ensures consistency between the buffer map of the first service node and the transaction content data locally stored in the first service node. Moreover, it is avoided that the first service node requests acquiring the same transaction content data repeatedly from the second service node, and it facilitates other service nodes requesting the updated transaction content data from the first service node according to the updated buffer map of the first service node.

In S730, the first service node transmits the updated second buffer map to the second service node.

The first service node may broadcast the second buffer map of the first service node to service nodes which comprise the second service node. Thereby, it is facilitated that the second service node receives transaction content data, which is transmitted by the first service node, according to the second buffer map. Each service node updates and maintains its own buffer map in real time according to changes in the local transaction content data, which implements transmission of the transaction content data among the service nodes. Accordingly, the network of the consensus nodes is less consumed by the service nodes and normal block production after consensus is less affected by nonessential data requests in the blockchain.

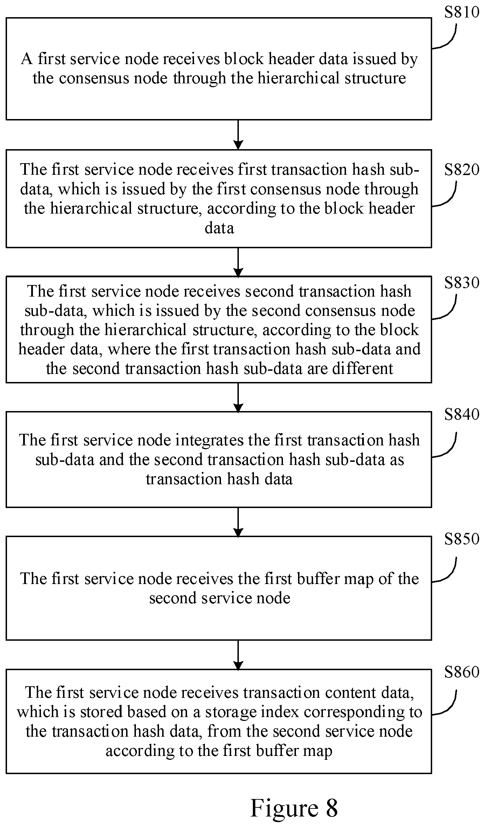

Figure 8 shows a flowchart of a method for data synchronization based on a blockchain according to an embodiment of the present disclosure.

As shown in Figure 8, in this embodiment, the consensus node may include a first consensus node and a second consensus node. The method for data synchronization based on the blockchain may comprise following steps S810 to S860.

In S810, the first service node receives block header data issued by the consensus node through the hierarchical structure.

Herein the step S810 may be similar to the step S510, which is not repeated herein.

In S820, the first service node receives first transaction hash sub-data, which is issued by the first consensus node through the hierarchical structure, according to the block header data.

In this embodiment, it is assumed that the first service node is the service node B as shown in Figure 6, the first consensus node is the consensus node F as shown in Figure 6, and the second consensus node is the consensus node A as shown in Figure 6. When the block header data acquired by the service node B concerns blocks whose heights ranging from 1 to 10000, the consensus node F may cache the first transaction hash sub-data as a priority, and the first transaction hash sub-data may comprise transaction hash data in block bodies of blocks whose heights are in a range of [1, n]. n is an integer greater than 0 and less than or equal to 10000. The consensus node A may cache second transaction hash sub-data concerning blocks whose heights are in a range of [n, 10000], as a priority. The second transaction hash sub-data may comprise transaction hash data in block bodies of blocks whose heights are in a range of [n, 10000]. Herein after caching the transaction hash data corresponding to some block heights as the priority, the consensus node may further continue to cache other transaction hash data, and eventually acquire transaction hash data in all blocks in the current blockchain.

In S830, the first service node receives second transaction hash sub-data, which is issued by the second consensus node through the hierarchical structure, according to the block header data, where the first transaction hash sub-data and the second transaction hash sub-data are different.

Herein the example for the step S820 is further taken. Assuming that n is equal to 5000, the service node B may acquire the transaction hash data in block bodies of blocks whose heights range from 1 to 5000 from the consensus node F, and acquire the transaction hash data in block bodies of blocks whose heights range from 5000 to 10000 from the consensus node A. The transaction hash data in the block bodies of the blocks whose heights range from 1 to 5000 is the first transaction hash sub-data, and the transaction hash data in the block bodies of the blocks whose heights range from 5000 to 10000 is the second transaction hash sub-data.

In S840, the first service node integrates the first transaction hash sub-data and the second transaction hash sub-data as the transaction hash data.

In this embodiment, the first service node may further issue the transaction hash data to a service node in a directly inferior layer through the hierarchical structure, after receiving the transaction hash data. Specifically, the first service node may generate a buffer map according to the local transaction hash data and broadcast the buffer map. The buffer map may further include a storage index of the transaction content data corresponding to the transaction hash data, which has been described in foregoing description and is not repeated herein. The service node in the directly inferior layer may communicate with the first service node according to the buffer map broadcast by the first service node, and receive the transaction hash data issued by the first service node. The service node in the directly inferior layer may download all transaction hash data of a complete block, which is stored in the first service node, according to the buffer map broadcast by the first service node, and then update the buffer map of its local transaction hash data. Thereby, correctness of the buffer map of the transaction hash data can be ensured.

In S850, the first service node receives the first buffer map of the second service node.

The step S850 may be similar to the step S530, and are repeated herein. In addition, the first buffer map of the second service node in this step comprises mapping between pieces of the transaction hash data and pieces of the transaction content data (e.g., which are represented by the storage index of the transaction content data) which are locally stored at the second service node. The transaction hash data may be fully stored in the second service node, and the transaction content data may be stored on demand. In such case, the buffer map of the second service node may comprise all pieces of transaction hash data in the blockchain, and comprise the storage index of each piece of the transaction content data which is mapped to the transaction hash data and is locally stored at the second service node. The transaction hash data corresponding to pieces of the transaction content data which are not stored t the second service node is marked.

In S860, the first service node receives the transaction content data, which is stored based on the storage index corresponding to the transaction hash data, from the second service node according to the first buffer map.

The step S860 may be similar to the step S540, and is not repeated herein.

In the forgoing embodiment, different consensus nodes cache the transaction hash data corresponding to different block heights as a priority, so that the first service node (namely, the service node B in the above example) can download the transaction hash data corresponding to different block heights in parallel from different consensus nodes. The synchronization of transaction hash data is more efficient.

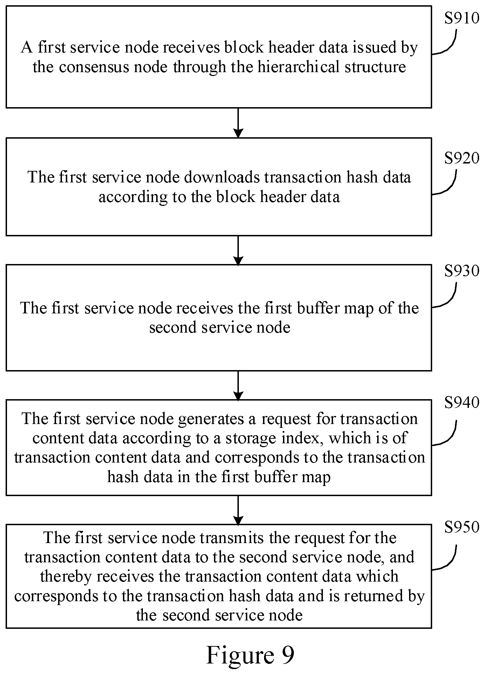

Figure 9 shows a flowchart of a method for data synchronization based on a blockchain according to an embodiment of the present disclosure.

As shown in Figure 9, the first service node and the second service node are service nodes in the same layer. Herein the method for data synchronization based on the blockchain may include following steps S910 to S950.

In S910, the first service node receives block header data issued by the consensus node through the hierarchical structure.

The step S910 may be similar to the step S510, and are not repeated herein.

In S920, the first service node downloads transaction hash data according to the block header data.

The step S920 may be similar to the step S520, and are not repeated herein.

In S930, the first service node receives the first buffer map of the second service node.

The step S930 may be similar to the step S530, and are not repeated herein.

In S940, the first service node generates a request for transaction content data according to a storage index, which is of the transaction content data and corresponds to the transaction hash data in the first buffer map.

Herein the second service node may generate a buffer map of the second service node according to the locally stored transaction content data, and broadcast the buffer map of the second service node to other nodes in the hierarchical structure. Besides receiving the buffer map of the second service node, the first service node may further receive buffer maps of other nodes in the hierarchical structure, which are broadcast to the first service node by the other nodes. The hierarchical structure as shown in in Figure 6 is taken as an example. The service node E serving as the first service node receives the buffer map of the service node H, which serves as the second service node, transmitted by the service node H, and may further receive the buffer map of the service node B, which is a parent node in the directly superior layer, transmitted by the service node B. In a case that both the buffer map of the service node H and the buffer map of the service node B indicate the transaction content data S required by the service node E, the service node E may transmit the request for transaction content data to a service node in the same layer as a priority. That is, the service node E first generates the request for transaction content data according to the buffer map of the service node H that is the same layer. The request for transaction content data may be a request for downloading the transaction content data S.

In S950, the first service node transmits the request for the transaction content data to the second service node, and thereby receives the transaction content data which corresponds to the transaction hash data and is returned by the second service node.

Herein the example for the step S940 is further taken. After the first service node transmits the request for transaction content data to the second service node in the same layer as the first service node, the second service node may transmit all transaction content data of a block, in which where the transaction content data S is located, to the first service node. The first service node may receive all transaction content data of such block, and then store the transaction content data S. The first service node may not process the other transaction content data that is not required by the first service node. The first service node may further update the local buffer map according to received transaction content data S. In this embodiment, the first service node caches all transaction content data of a complete block at the second service node, and updates the buffer map of the first service node, which can ensure correctness of the buffer map.

In an embodiment, the first service node may generate a first candidate request for transaction content data according to a buffer map of a parent node of the first service node, in a case that the first service node fails in generating the request for transaction content data. The first service node transmits the first candidate request for transaction content data to the parent node of the first service node, and receives the transaction content data which corresponds to the transaction hash data and is returned by the parent node of the first service node.

When the transaction content data S required by the first service node is not indicated by the first buffer map of the second service node, the first service node would fail in generating the request for transaction content data according to the buffer map of the second service node, In this embodiment, the second service node does not store the transaction content data S required by the first service node locally, and hence the first service node may generate the first candidate request for transaction content data according to the buffer map of the parent node in a layer directly superior to the first service node in the hierarchical structure. Herein the first service node transmits the request for transaction content data to the service node in the same layer as a priority. When the first service node fails in generating the request for transaction content data according to the buffer map(s) of the service node(s) of the same layer, the first service node generates the first candidate request for transaction content data according to the buffer map of the parent node in the directly superior layer, as a new request for transaction content data. Thereby, it is prevented that the same transaction content data is repeatedly requested from the directly superior layer, and there is less data transmission between different layers in the hierarchical structure.

In an embodiment, the parent node of the first service node is a child node of the consensus node. When the first service node fails in generating the first candidate request for transaction content data, the first service node generates a second candidate request for transaction content data according to a buffer map of the consensus node. The first service node transmits the second candidate request for transaction content data to the consensus node, and receives the transaction content data which corresponds to the transaction hash data and is returned by the consensus node.

The hierarchical structure as shown in Figure 6 is taken as an example. It is assumed that the first service node is the node E and the parent node of the first service node is the node B. The child node of the consensus node is the node B, that is, the parent node of the first service node, and hence the consensus node in this example may be the node F or the node A as shown in Figure 6. It is further taken as an example that the consensus node is the node F. When the first service node E fails in generating the request for transaction content data according to a buffer map of its parent node B, it may generate the second candidate request for transaction content data according to a buffer map of consensus node F, as a new request for transaction content data, because a node in the layer directly superior to the node B is already a root node, i.e., the consensus node, of the hierarchical structure. Thereby, the consensus node F can return the transaction data content to the first service node E, in response to the second candidate request for transaction content data. Herein when the first service node fails in generating the request for transaction content data according to both buffer maps of the service node in the same layer and the parent node in the directly superior layer, the first service node issues the request for transaction content data to the consensus node. Such scheme is "first requesting data through P2P, then accessing a superior layer when failing", which prevents the first service node from over-consuming the network, and ensures that nonessential data requests in the blockchain do not affect normal block production after consensus.

Another embodiment is illustrated based on Figure 6. In the hierarchical structure as shown in Figure 6, the connection topology as shown in Figure 6 is formed up-down from consensus nodes. The consensus nodes of the core consensus network layer are kept as root nodes in the first layer, and full connectivity are achieved among the consensus nodes. The service nodes B, C, D, E, and H are arranged hierarchically in a sequence according to node sizes and management to complete the hierarchical structure. It may be required that each node has two or more parent nodes, and hence that a quantity of nodes in each layer is more than twice a quantity of nodes in the directly superior layer.

In such hierarchical structure, in a case that a certain service node fails in accessing a parent node in a layer directly superior to such service node, the service node seeks connection with a parent node of another service node in the same layer, such that it keeps connection with 3 or more parent nodes. In a case that such parent node cannot be found, the service node seeks connection with a service node in the same layer.

Herein the method for data synchronization is applicable to synchronization of block data. The synchronization of block data may be divided between block body data and block header data. The block header data may be issued in sequence. After acquiring new block header data, a layer in the hierarchical structure may actively push the new block header data to nodes in an inferior layer. When a node in an inferior layer is aware of its current block headers being insufficient, the node may initiate a connection (such as a streaming connection) to the parent node directly. After the connection is completed, the node in the inferior layer may download and verify the block header data in sequence.

After acquiring the block header data, a service node may download the block body data according to the block header data. The block body data can be categorized into transaction hash data and transaction content data. Each service node maintains its own buffer map (for example, in the form of buffermap) between the transaction hash data and the transaction content data, and interacts with child nodes of such service node.

In order to ensure correctness of the buffer map, when the service node downloads the block body data, the service node may be configured to download at least all transaction hash data or all transaction content data of one complete block each time, and then update its own buffer map.

All nodes (including the consensus nodes and the service nodes) are required to eventually synchronize all transaction hash data. Different consensus nodes cache the transaction hash data corresponding to different block heights as priorities, and such transaction hash data are permitted to be downloaded in parallel. Therefore, the service node may download the transaction hash data concurrently from the nodes in the directly superior layer according to content of the acquired buffer maps. For example, all content of the nodes in the directly superior layer may be downloaded according to the content of the buffer maps. The download may not follow the sequence as long as all content is eventually completely downloaded.

Each service node may download the transaction content data on demand according to, for example, the "first requesting data through P2P, then accessing a superior layer when failing" scheme.

In a case that a service node acquires the buffer maps of all its parent nodes and does not find data which it requires, the service node may issue a downloading request (i.e., a request for transaction content data) to a random one of its parent nodes, so as to obtain a parent node of such parent node. Thereby, the service node can access an indirectly superior layer until finding a node of which the buffer map indicates the required data.

The hierarchical structure according to embodiments of the present disclosure ensures a certain degree of connectivity, and is capable to prevent over-connection and network storms. During data synchronization, data are distinguished according to three types, i.e., the block header data, the transaction hash data, and the transaction content data, which match different download policies in a P2P network. Performances of the P2Pr network can be fully exploited, the consensus nodes in the network are less consumed, and it is ensured nonessential data requests of the blockchain do not affect normal block production after consensus.

Hereinafter introduced are system embodiments of the present disclosure, which can be configured to implement the foregoing method for data synchronization based on the blockchain. Details not disclosed in the system embodiments may refer to the foregoing embodiments of the method for data synchronization based on the blockchain.

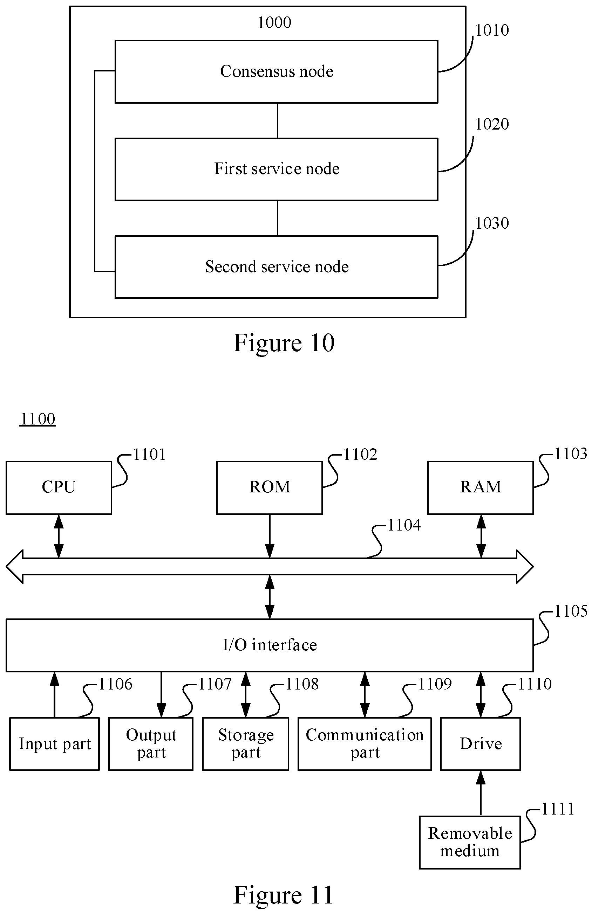

Figure 10 shows a schematic block diagram of a system for data synchronization based on a blockchain according to an embodiment of the present disclosure.

As shown in Figure 10, a system 1000 for data synchronization based on a blockchain may comprise a hierarchical structure comprising a consensus node 1010, a first service node 1020, and a second service node 1030. The consensus node 1010 is a root node in the hierarchical structure, and the first service node 1020 and the second service node 1030 are descendant nodes of the consensus node 1010.

The consensus node 1010 is configured to issue block header data through the hierarchical structure.

The consensus node 1010 is further configured to issue transaction hash data and transaction content data through the hierarchical structure.

The second service node 1030 is configured to transmit a buffer map of the second service node to the first service node. The buffer map comprises a mapping correspondence between the transaction hash data and a storage index of the transaction content data locally at the second service node.

The first service node 1020 is configured to receive the block header data issued by the consensus node 1010 through the hierarchical structure, download the transaction hash data according to the block header data, receive the buffer map of the second service node 1030, and receive the transaction content data, which is stored based on the storage index corresponding to the transaction hash data, from the second service node 1030 according to the buffer map of the second service node 1030.

Herein the system for data synchronization based on the blockchain is based on the hierarchical structure formed by the consensus node, the first service node and the second service node. The block header data is issued to the first service node through the hierarchical structure, which can ensure certain connectivity between the consensus node and the service nodes (the first service node and the second service node) while preventing over-connection between the service nodes and the consensus node. The consensus node serving as the root node issues the block header data to a descendant node serving as a service node, which can achieve fast issuance of the block header data. The download of the transaction hash data is triggered according to the block header data, and the transaction content data is transmitted from the second service node to the first service node, which can fully exploit performances of a peer-to-peer network and reduce a network consumption of the consensus node due to the service nodes. It is ensured that a nonessential data request of the blockchain does not affect normal block production after consensus.

In an embodiment, the first service node 1020 may be further configured to: determine a second buffer map of the first service node according to local transaction content data of the first service node; update the second buffer map of the first service node 1020 according to the transaction content data of the second service node 1030, in response to receiving the transaction content data transmitted by the second service node 1030; and transmit the updated second buffer map to the second service node 1030.

In an embodiment, the first service node 1020 may be further configured to: add a service node in a layer directly superior to the first service node in the hierarchical structure as a new parent node of the first service node 1020, in response to a quantity of parent nodes of the first service node 1020 being less than a quantity threshold of parent nodes, or connection between the first service node 1020 and a parent node of the first service node 1020 failing; and add a service node in a same layer as the first service node in the hierarchical structure as the new parent node of the first service node 1020, in response to adding the service node in the layer directly superior to the first service node as the new parent node failing.

In an embodiment, the first service node 1020 may be further configured to: perform verification on the block header data according to first block hash information of the block header data and second block hash information of target block header data, the target block header data is locally stored and is directly previous to the block header data. The first service node 1020 performs downloading the transaction hash data according to the block header data, in response to the verification succeeds.

In an embodiment, the first service node 1020 may be configured to: receive the block header data issued by the consensus node via the parent node of the first service node 1020. The block header data is issued to the parent node of the first service node 1010 by the consensus node 1020 through the hierarchical structure.

In an embodiment, the consensus node comprises a first consensus node and a second consensus node. When the first service node 1020 downloads the transaction hash data according to the block header data, the first service node 1020 may be configured to: receive first transaction hash sub-data, which is issued by the first consensus node through the hierarchical structure, according to the block header data; receive second transaction hash sub-data, which is issued by the second consensus node through the hierarchical structure, according to the block header data, where the first transaction hash sub-data and the second transaction hash sub-data are different; and integrate the first transaction hash sub-data and the second transaction hash sub-data as the transaction hash data.

In an embodiment, the first service node and the second service node are located in a same layer in the hierarchical structure. The first service node 1020 may be configured to: generate a request for transaction content data according to the storage index, which is of the transaction content data and corresponds to the transaction hash data in the first buffer map; transmit the request for transaction content data to the second service node 1030; and receive the transaction content data, which corresponds to the transaction hash data and is returned by the second service node 1030 as a response to the request for transaction content data .

In an embodiment, the first service node 1020 may be further configured to: generate a first candidate request for transaction content data according to a buffer map of a parent node of the first service node 1020, in response to the first service node failing in generating the request for transaction content data; transmit the first candidate request for transaction content data to the parent node of the first service node 1020; and receive the transaction content data, which corresponds to the transaction hash data and is returned by the parent node of the first service node 1020 as a response to the first candidate request for transaction content data.

In an embodiment, the parent node of the first service node 1020 is a child node of the consensus node. The first service node 1020 may be further configured to: generate a second candidate request for transaction content data according to a buffer map of the consensus node 1010, in response to the first service node failing in generating the first candidate request for transaction content data; transmit the second candidate request for transaction content data to the consensus node 1010; and receive the transaction content data, which corresponds to the transaction hash data and is returned by the consensus node 1010 as a response to the second candidate request for transaction content data.

Figure 11 is a schematic structural diagram of a computer system of an electronic device suitable for implementing embodiments of the present disclosure. The computer system 1100 of the electronic device as shown in Figure 11 is merely an example, and does not constitute any limitation on functions or applications of embodiments of the present disclosure.

As shown in Figure 11, the computer system 1100 includes a central processing unit (CPU) 1101 capable to perform various appropriate actions and processing, for example, perform the method according foregoing embodiments, according to a program stored in a read-only memory (ROM) 1102 or a program loaded into a random-access memory (RAM) 1103 from a storage component 1108. The RAM 1103 further stores various programs and data required for system operations. The CPU 1101, the ROM 1102, and the RAM 1103 are connected to each other via a bus 1104. An input/output (I/O) interface 1105 is coupled to the bus 1104.

Components connected to the I/O interface 1105 includes: an input component 1106, including a keyboard, a mouse, or the like; an output component 1107, including a cathode ray tube (CRT), a liquid crystal display (LCD), a speaker, and the like; the storage component1308, including a hard disk or the like; and a communication component 1109, including a network interface card such as an LAN card or a modem. The communication component 1109 performs communication via a network such as the Internet. A driver 1110 is further coupled to the I/O interface 1105 on requirements. A removable medium 1111, such as a magnetic disk, an optical disc, a magneto-optical disk, or a semiconductor memory, is installed on the drive 1110 on requirement, so that a computer program read from the removable medium can be installed on the storage component 1108 on requirement.

Particularly, according to an embodiment of the present disclosure, the foregoing processes described with reference to the flowcharts may be implemented as computer software programs. A computer program product is provided according to an embodiment of the present disclosure. The computer program product includes a computer program stored in a computer-readable medium. The computer program includes program codes for performing the method as shown in the flowcharts. In such embodiment, the computer program may be downloaded and installed from the network via the communication portion 1109, and/or installed from the removable medium 1111. When the computer program is executed by the CPU 1101, various functions defined in the method and the apparatus according to embodiments of the present disclosure are implemented.

The computer-readable medium according to embodiments the present disclosure may be a computer-readable signal medium, a computer-readable storage medium, or any combination of the two. For example, the computer-readable storage medium may be, but is not limited to, an electric/magnetic/optical/electromagnetic/infrared/semiconductor system/apparatus/component, or any combination of the above forms. A more specific example of the computer-readable storage medium may include, but is not limited to, an electrical connection having one or more wires, a portable computer magnetic disk, a hard disk, a random-access memory (RAM), a read-only memory (ROM), an erasable programmable read-only memory (EPROM or a flash memory), an optical fiber, a compact disk read-only memory (CD-ROM), an optical storage device, a magnetic storage device, or any appropriate combination of the above forms. Herein the computer-readable storage medium may be any tangible medium containing or storing a program, and the program may be used by, or in combination with, an instruction executing system/apparatus/device. Herein the computer-readable signal medium may include a data signal transmitted in a baseband or propagating as a part of a carrier wave, and the data signal carries computer-readable program codes. The propagating data signal may be various forms, which include but is not limited to an electromagnetic signal, an optical signal, or any suitable combination of the two. The computer-readable signal medium may be any computer-readable medium other than the computer-readable storage medium. The computer-readable medium may send, carry, or transmit a program, and the program is used by or in combination with an instruction executing system/apparatus/device. The program codes contained in the computer-readable medium may be transmitted via any appropriate medium, which includes but is not limited to: a wireless medium, a wire, an optical cable, radio frequency, any suitable combination of the above forms, or the like.

The flowcharts and block diagrams in the drawings illustrate feasible system architecture, functions, and operations that may be implemented by a system, a method, and a computer program product according to various embodiments of the present disclosure. In this regard, each box in a flowchart or a block diagram may represent a module, a program segment, or a part of codes. The module, the program segment, or the part of codes includes one or more executable instructions configured to implement a designated logic function. In some alternative embodiments, functions as annotations in the boxes may be implemented in a sequence different from that as shown in the drawings. For example, in practice, two boxes shown in succession may be performed substantially simultaneously, and sometimes may be performed in a reverse sequence, which is determined by related functions. Each block/box and a combination of block/boxes in a block diagram and/or a flowchart may be implemented through a dedicated hardware-based system, which is configured to achieve a specified function or operation, or may be implemented through a combination of dedicated hardware and computer instructions.

In another aspect, a computer readable medium is further provided according to embodiments of the present disclosure. The computer readable medium may be comprised in the electronic device described in the forgoing embodiments, or may exist independently without being assembled into an electronic device. The computer-readable medium carries one or more programs, and the one or more programs when executed by the electronic device configure the electronic device to implement the method described in the foregoing embodiments. For example, the electronic device may implement the various steps as shown in Figures 5, 7, 8, and 9.

A computer program product including instructions is further provided according to embodiments of the present disclosure. The computer program product when executed on a computer configures the computer to perform the method provided in the foregoing embodiments.

Description of the foregoing embodiments facilitates those skilled in the art would easily understanding that the exemplary implementations described herein may be implemented through software, or software in combination with necessary hardware. Therefore, technical solutions in embodiments of the present disclosure may be implemented as a software product. The software product may be stored in a non-volatile storage medium (which may be a CD-ROM, a USB flash drive, a removable hard disk, or the like) or in the network, comprise several instructions for instructing a computing device (which may be a personal computer, a server, a touch terminal, a network device, or the like) to perform the method according to the foregoing embodiments of the present disclosure.

Those skilled in the art that read the specification and practice the disclosed implementations would easily reach other implementations of the present disclosure. The present disclosure is intended to cover any variation, use, or adaptive change thereof. These variations, uses, or adaptive changes follow a general principle of the present disclosure and comprise common general knowledge or common technical means in the art which are not disclosed herein. The specification and embodiments are merely exemplary, and the scope and spirit of the present disclosure is indicated by appended claims.

The present disclosure is not limited to precise structures as described above and a shown in the drawings. Various modifications and changes can be made without departing from the scope of the present disclosure. The scope of the present disclosure is only limited by the appended claims.

## Claims

1. A method for data synchronization based on a blockchain, wherein:
the blockchain comprises a hierarchical structure comprising a consensus node, a first service node, and a second service node, wherein the consensus node is a root node in the hierarchical structure, and the first service node and the second service node are descendant nodes of the consensus node;
the method comprises:
receiving, by the first service node, block header data which is issued by the consensus node through the hierarchical structure;
downloading, by the first service node, transaction hash data according to the block header data;
receiving, by the first service node, a first buffer map of the second service node, wherein the first buffer map comprises a mapping correspondence between the transaction hash data and a storage index of transaction content data locally at the second service node; and
receiving, by the first service node, the transaction content data, which is stored based on the storage index corresponding to the transaction hash data, from the second service node according to the first buffer map.

2. The method according to claim 1, further comprising:
determining, by the first service node, a second buffer map of the first service node according to local transaction content data of the first service node;
updating, by the first service node, the second buffer map of the first service node according to the transaction content data of the second service node, in response to the first service node receiving the transaction content data transmitted by the second service node; and
transmitting the updated second buffer map to the second service node.

3. The method according to claim 1, further comprising:
adding a service node in a layer directly superior to the first service node in the hierarchical structure as a new parent node of the first service node, in response to a quantity of parent nodes of the first service node being less than a quantity threshold of parent nodes, or in response to connection between the first service node and a parent node of the first service node failing; and
adding a service node in a same layer as the first service node in the hierarchical structure as the new parent node of the first service node, in response to adding the service node in the layer directly superior to the first service node as the new parent node failing.

4. The method according to claim 1, further comprising:
performing, by the first service node, verification on the block header data according to first block hash information of the block header data and second block hash information of target block header data, wherein the target block header data is locally stored and is directly previous to the block header data;
wherein in response to the verification succeeds, the first service node performs downloading the transaction hash data according to the block header data.

5. The method according to claim 1, wherein receiving the block header data which is issued by the consensus node through the hierarchical structure comprises:
receiving the block header data issued by the consensus node via the parent node of the first service node;
wherein the consensus node issues the block header data to the parent node of the first service node through the hierarchical structure.

6. The method according to any one of claims 1 to 5, wherein the consensus node comprises a first consensus node and a second consensus node, and downloading the transaction hash data according to the block header data comprises:
receiving first transaction hash sub-data, which is issued by the first consensus node through the hierarchical structure, according to the block header data;
receiving second transaction hash sub-data, which is issued by the second consensus node through the hierarchical structure, according to the block header data, wherein the first transaction hash sub-data and the second transaction hash sub-data are different; and
integrating the first transaction hash sub-data and the second transaction hash sub-data as the transaction hash data.

7. The method according to any one of claims 1 to 5, wherein the first service node and the second service node are located in a same layer in the hierarchical structure, and receiving the transaction content data, which is stored based on the storage index corresponding to the transaction hash data, from the second service node according to the first buffer map comprises:
generating a request for transaction content data according to the storage index, which is of the transaction content data and corresponds to the transaction hash data in the first buffer map;
transmitting the request for transaction content data to the second service node; and
receiving the transaction content data, which corresponds to the transaction hash data and is returned by the second service node as a response to the request for transaction content data.

8. The method according to claim 7, further comprising:
generating a first candidate request for transaction content data according to a buffer map of a parent node of the first service node, in response to the first service node failing in generating the request for transaction content data;
transmitting the first candidate request for transaction content data to the parent node of the first service node; and
receiving the transaction content data, which corresponds to the transaction hash data and is returned by the parent node of the first service node as a response to the first candidate request for transaction content data.

9. The method according to claim 8, wherein the parent node of the first service node is a child node of the consensus node, and the method further comprises:
generating a second candidate request for transaction content data according to a buffer map of the consensus node, in response to the first service node failing in generating the first candidate request for transaction content data;
transmitting the second candidate request for transaction content data to the consensus node; and
receiving the transaction content data, which corresponds to the transaction hash data and is returned by the consensus node as a response to the second candidate request for transaction content data.

10. A system for data synchronization based on a blockchain, comprising:
a hierarchical structure comprising a consensus node, a first service node and a second service node, wherein the consensus node is a root node in the hierarchical structure, and the first service node and the second service node are descendant nodes of the consensus node;
wherein the consensus node is configured to issue block header data through the hierarchical structure;
wherein the second service node is configured to transmit a buffer map of the second service node to the first service node, and the first buffer map comprises a correspondence between the transaction hash data and a storage index of transaction content data locally at the second service node; and
wherein the first service node is configured to:
receive the block header data issued by the consensus node through the hierarchical structure;
download the transaction hash data according to the block header data;
receive the buffer map of the second service node; and
receive the transaction content data, which is stored based on the storage index corresponding to the transaction hash data, from the second service node according to the buffer map.

11. An electronic device, comprising:
at least one processor; and
a storage apparatus, configured to store at least one program;
wherein the at least one program when executed by the at least one processor configures the at least one processor to implement the method according to any one of claims 1 to 9.

12. A computer-readable medium, storing a computer program, wherein:
the computer program when executed by a processor implements the method according to any one of claims 1 to 9.

13. A computer program product, comprising instructions, wherein:
the instructions when executed on a computer configure the computer to perform the method according to any one of claims 1 to 9.
